# EUROPEAN PATENT APPLICATION

(11) **EP 2 202 113 A2**
(43) Date of publication of application: **30.06.2010**
(21) Application number: 09178453.8
(22) Date of filing: 09.12.2009
(51) Int. Cl.: B60L 11/18

(54) **System and method for pay as you go charging for electric vehicles**

(30) Priority: 22.12.2008 US 341548
(71) Applicant: General Electric Company, Schenectady, NY 12345 (US)
(72) Inventor: Littrell, Nathan Bowman, Gardnerville, NV 89410 (US)
(74) Representative: Gray, Thomas

(57) **Abstract**

A vehicle charging station (104,206,208,408) for use in transmitting electrical charging power to a vehicle (102,404) for use in charging the vehicle is provided. The vehicle charging station (104,206,208,408) includes a controller (210) configured to receive a request (112,212) for authorization from the vehicle, and transmit a response (114,214) to the vehicle, wherein the response indicates either an approval or a denial of the request, and an electricity power meter (110,216,414) configured to receive a quantity of electrical charging power and measurement information from the controller, measure the quantity of electrical charging power delivered to the vehicle, and transmit the measurement of the quantity of received electrical charging power to the controller.

## Description

### BACKGROUND OF THE INVENTION

The subject matter disclosed herein relates generally to the charging of a mobile electric load and more specifically, to metering electricity transferred to an electric vehicle, and recognizing the billing and revenue charges based on an amount of electric power transferred to the electric vehicle.

As electric vehicles and hybrid electric vehicles gain popularity, an associated need to accurately manage delivery of electrical energy to them has increased. Moreover, a need to recognize revenue due to the energy supplier has been created by the increased use of such vehicles.

At least some known electric delivery systems provide electric metering at a customer's premises. For example, some delivery systems use an encoded magnetic strip that is applied to a card to transfer purchase information between a utility billing office and a utility metering and control device located at the customer's premises. A credit meter stored within the control device deducts a value associated with an amount of electricity consumed at the customer's premises. Some of such systems also enable the use of an emergency card that includes a similar encoded magnetic strip when the customer's account with the pre-purchased amount is exhausted. However, generally such systems do not provide for metering of electrical power transferred to a specific electric load, and are thus not compatible for use with electric vehicles.

Moreover, at least some known electricity delivery systems enable mobile metering of electricity use. For example, some of such systems measure power delivered, while work is performed on a power network, using a mobile meter system (MMS) that receives high voltage inputs by connecting secondary side conductors and neutrals of a substation transformer to designated terminals on the MMS. The MMS then transforms the inputs using metering instruments and provides currents and voltages that can be metered and are accessible via an external metering cabinet. However, such known mobile systems do not measure electricity delivery to electric vehicles.

Furthermore, at least some known systems provide remote monitoring of electricity consumption. For example, some delivery systems provide remote monitoring via wireless communication between a communication device associated with an electricity meter and a site controller. More specifically, a communication device receives data from an associated electric meter that is indicative of an amount of electricity metered, and generates a transmitted message to the site controller via a wireless communication network. However, such systems are intended for use in metering electricity for a temporary stationary site and not for a specific, normally mobile, electric load, such as measuring electricity delivery to electric vehicles.

Accordingly, it is desirable to provide a system for use in metering an amount of electrical power transferred to a mobile electric load, such as an electric vehicle, wherein the system accepts a payment for the electric charging transaction from a user of such electric vehicle or from an account tied to the user or electric vehicle, based on the amount of electrical power transferred to the electric vehicle.

### BRIEF DESCRIPTION OF THE INVENTION

In one aspect, a vehicle charging station for use in transmitting electrical charging power to a vehicle for use in charging the vehicle includes a controller configured to receive a request for authorization from the vehicle, and transmit a response to the vehicle, wherein the response indicates either an approval or a denial of the request. The vehicle charging station also includes an electricity power meter configured to receive a quantity of electrical charging power and measurement information from the controller, measure the quantity of electrical charging power delivered to the vehicle, and transmit the measurement of the quantity of received electrical charging power to the controller.

In another aspect, a vehicle charging system for use with charging an electric vehicle includes an electricity charging controller configured to receive a request for authorization for an electric charging transaction from the electric vehicle and send a response to the electric vehicle indicating an approval or denial of the request. The vehicle charging system also includes a conduit configured to couple the electric vehicle to an energy source to receive electrical charging power from the energy source. Further, the vehicle charging system includes an electricity power meter configured to receive a quantity of electrical charging power and measurement information from the controller, and deliver the requested quantity of electrical charging power, received by the controller, to the electric vehicle based on the information received by the controller.

In yet another aspect, a method for charging an electric vehicle includes receiving a request for authorization for an electric charging transaction from the electric vehicle, transmitting a response to the electric vehicle, wherein the response is indicative of one of an approval and a denial of the request, and receiving, from an electricity power meter, a quantity of electrical charging power. The electricity power meter is configured to receive measurement information from an electricity charging controller, measure a quantity of electrical charging power delivered to the electric vehicle, and transmit the requested quantity of electric charging power to the vehicle.

### BRIEF DESCRIPTION OF THE DRAWINGS

There follows a detailed description of embodiments of the invention by way of example only with reference to the accompanying drawings, in which:
Figure 1 is a block diagram of an exemplary electricity delivery system for use with an electric vehicle;
Figure 2 is a block diagram of an exemplary system for use in delivering electrical charging power to an electric vehicle;
Figure 3 is a flow chart of an exemplary method for use in delivering electrical charging power to an electric vehicle; and
Figure 4 illustrates a user interacting with an exemplary vehicle charging system to charge an electric vehicle.

### DETAILED DESCRIPTION OF THE INVENTION

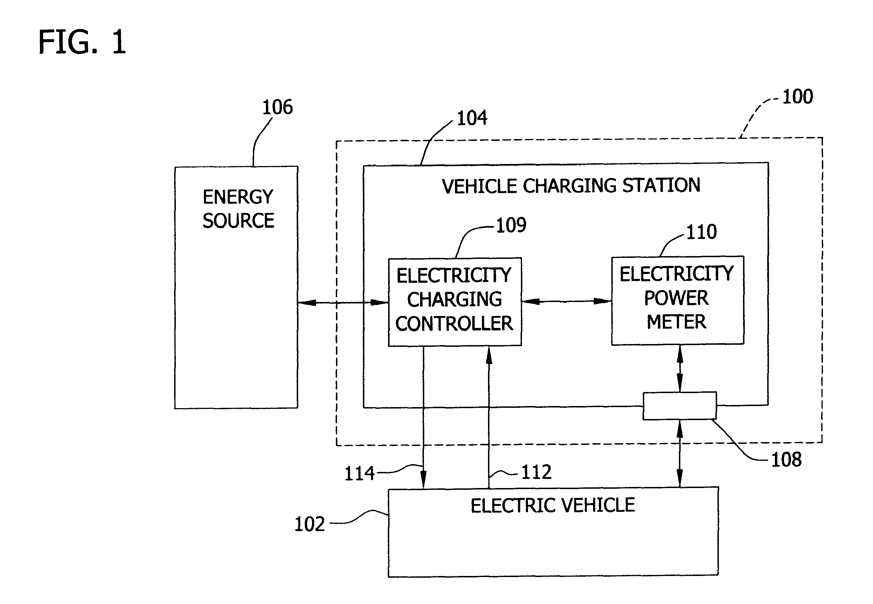

As used herein, the term "electric vehicle" includes any vehicle that includes one or more electric motors that are used for propulsion, such as an all-electric vehicle that uses only electricity, and/or a plug-in hybrid-electric vehicle that uses a gas powered engine in combination with batteries charged by an external power source or an engine and generator, to propel the vehicle. In addition, the term "electric vehicle" includes any suitable vehicle known to those skilled in the art and guided by the teachings herein provided that is capable of performing the functions described herein. Moreover, as used herein, the term "controller" and "processor" are interchangeable, and refer to a central processing unit, a microprocessor, a microcontroller, a microcomputer, a reduced instruction set circuit (RISC), an application specific integrated circuit (ASIC), a programmable logic controller, and any other circuit known to those skilled in the art and guided by the teachings herein provided that is capable of being used as described herein. Furthermore, as used herein, the term "software" and "firmware" are interchangeable, and includes any computer program stored in memory for execution by a controller 109 (shown in Figure 1), including random access memory (RAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Technical effects of the methods, systems, and vehicle charging station described herein include at least one of receiving a request for authorization for an electric charging transaction from an electric vehicle; sending a response to the electric vehicle indicating one or more of approval or denial of the request; measuring a quantity of electrical charging power received from an electricity charging controller and delivered through an electricity power meter to the electric vehicle; receiving, by the station, a numerical value from the electricity power meter representing a quantity of electrical charging power received by the electrical power meter; sending the measurement to the electricity charging controller; and/or receiving at least one payment from a user for access to, and the monetary value of, electrical charging power.

Figure 1 is a block diagram of an exemplary electricity delivery system 100 for use with an electric vehicle 102. In the exemplary embodiment, vehicle charging station 104 is coupled to an energy source 106 and to a conduit 108 that transmits electrical charging power to electric vehicle 102, for use in charging electric vehicle 102. In the exemplary embodiment, vehicle charging station 104, which includes an electricity charging controller 109 and an electricity power meter 110, is capable of providing electrical charging power simultaneously to one or more electric vehicles 102. In the exemplary embodiment, electricity charging controller 109 may receive a request 112 for authorization for an electric charging transaction from electric vehicle 102, and in response, may transmit a response 114 to electric vehicle 102 indicating either approval or a denial of request 112. In other embodiments, electricity power meter 110 receives a quantity of electrical charging power and measurement information from electricity charging controller 109, measures a quantity of electrical charging power received from electricity charging controller 109 and delivered through meter 110 to electric vehicle 102, and transmits the measurement to electricity charging controller 109. In one embodiment, request 112 includes a request for a predetermined quantity of electrical charging power.

In the exemplary embodiment, vehicle charging station 104 displays at least one of the quantity of electrical charging power delivered, the monetary value of the quantity of electrical charging power delivered, and/or the quantity of electrical charging power remaining to be delivered. Such a display can be performed via any suitable display known to those skilled in the art and guided by the teachings herein provided, such as via a display screen coupled to vehicle charging station 104 or to electric vehicle 102.

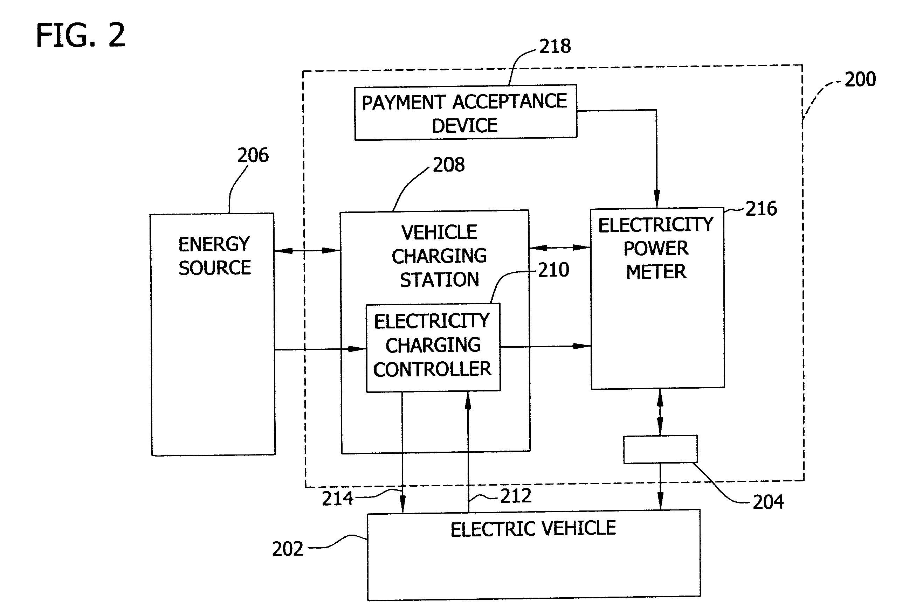

Figure 2 is a block diagram of an exemplary system 200 for use in delivering electrical charging power to an electric vehicle 202. In the exemplary embodiment, system 200 includes a conduit 204 that couples electric vehicle 202 to an energy source 206 to receive electrical charging power from energy source 206 and that enables transfer of electrical charging power to electric vehicle 202. System 200 also includes a vehicle charging station 208 that includes an electricity charging controller 210 that receives a request 212 for authorization, i.e. an electric charging transaction, from electric vehicle 202, and transmits a response 214 to electric vehicle 202 indicating either approval or a denial of request 212. System 200 also includes an electricity power meter 216 that receives a quantity of electrical charging power and measurement information from controller 210, measures a quantity of electrical charging power received from controller 210 and delivered through meter 216 to electric vehicle 202, and transmits the measurement to controller 210. In another embodiment, request 212 also includes a request for a pre-determined quantity of electrical charging power.

In the exemplary embodiment, system 200 includes a payment acceptance device 218 that receives at least one payment from a user in exchange for the electric charging transaction. In response, in one embodiment, vehicle charging station 206 denies access to electrical charging power until at least one payment is received by payment acceptance device 218, and then subsequently, electricity power meter 216 delivers a quantity of electrical charging power based on the monetary value of the one payment. Alternatively, in another embodiment, vehicle charging station 208 authorizes the electric charging transaction prior to payment acceptance device 218 receiving at least one payment from the user, thus enabling the user to charge electric vehicle 202 prior to paying for the electric charging transaction. In such an embodiment, upon receiving at least one payment from the user, payment acceptance device 218 then deducts the monetary value of the quantity of electrical charging power delivered and provides for a refund of any remaining balance based on the deduction. The refund can be provided via any electronic means, by alerting an attendant to provide such a refund, and/or via any suitable method or process known to those skilled in the art and guided by the teachings herein, provided that the method is capable of performing the functions as described herein.

In another embodiment, system 200 includes one or more vehicle charging stations 208 wherein each vehicle charging station 208 is coupled to at least two electricity power meters 216 and each vehicle charging station 208 is capable of providing electrical charging power simultaneously to one or more electric vehicles 202 coupled to each electricity power meter 216. In such an embodiment, one or more payment acceptance devices 218 are coupled to one or more vehicle charging stations wherein each payment acceptance device 218 is capable of receiving payments for one or more vehicle charging stations 208. In the exemplary embodiment, system 200 displays at least one of the quantity of electrical charging power delivered, the monetary value of the quantity of electrical charging power delivered, the quantity of electrical charging power remaining to be delivered, and/or the remaining balance of the monetary value of the payment. Such a display can be performed via any suitable display known to those skilled in the art and guided by the teachings herein provided, such as via a display screen coupled to vehicle charging station 208 or to electric vehicle 202.

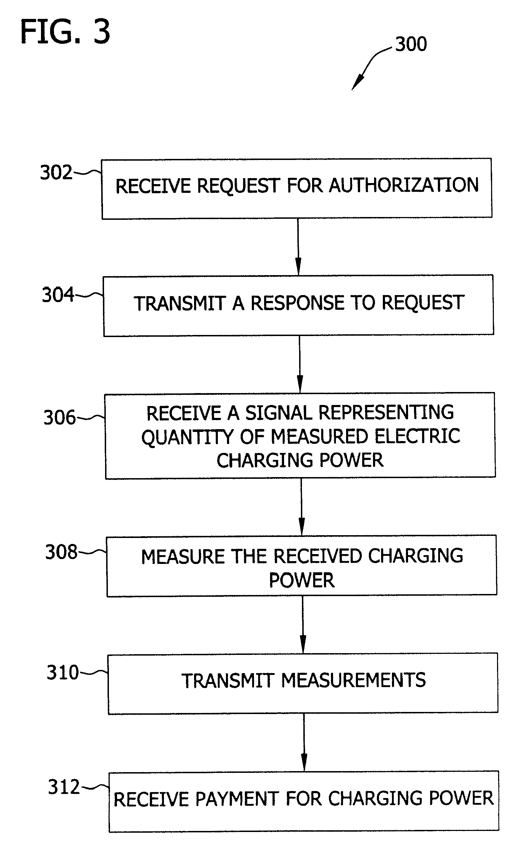

Figure 3 is a flow chart of an exemplary method 300 for use in delivering electrical charging power to an electric vehicle, such as shown in Figure 2. In the exemplary embodiment, the method includes receiving 302 a request for authorization for an electric charging transaction from electric vehicle, and transmitting 304 a response to the electric vehicle indicating either an approval or a denial of the request. A signal is received 306 from an electricity power meter representative of a quantity of electrical charging power received by electricity power meter. The electricity power meter receives 306 a quantity of electrical charging power and accompanying measurement information from an electricity charging controller, measures 308 the quantity of electrical charging power received from the electricity charging controller and delivered to the electric vehicle, and transmits 310 the measurement and measurement information to the electricity charging controller. At least one payment is received 312 at a payment acceptance device from a user.

In one embodiment, the request received 302 includes a request for a pre-determined quantity of electrical charging power. In another embodiment, the response transmitted 304 includes a denial of access to electrical charging power until at least one payment is received 312 at the payment acceptance device. In such an embodiment, subsequent to receiving 312 at least one payment, a quantity of electrical charging power is delivered based on the monetary value of the payment. In another embodiment, the response transmitted 304 includes an authorization for the electric charging transaction prior to the payment acceptance device receiving at least one payment from the user, thus enabling the user to charge electric vehicle prior to paying for the electric charging transaction. Further, in such an embodiment, upon receiving 312 at least one payment, the payment acceptance device deducts the monetary value of the quantity of the electrical charging power and based on the deduction, may provide a refund of any remaining balance. The refund can be provided via any known electronic means, by alerting an attendant to provide such a refund, and any suitable method that is capable of performing the functions described herein.

In other embodiments, at least one of receiving 302, transmitting 304, receiving 306, and/or transmitting 310, is performed via at least one of a wireless communication device or a wired communication device, and uses, for example, wireless fidelity, broadband over power lines, RFID, and/or any suitable communications method known to those skilled in the art that that enables method 300 to be performed as described herein.

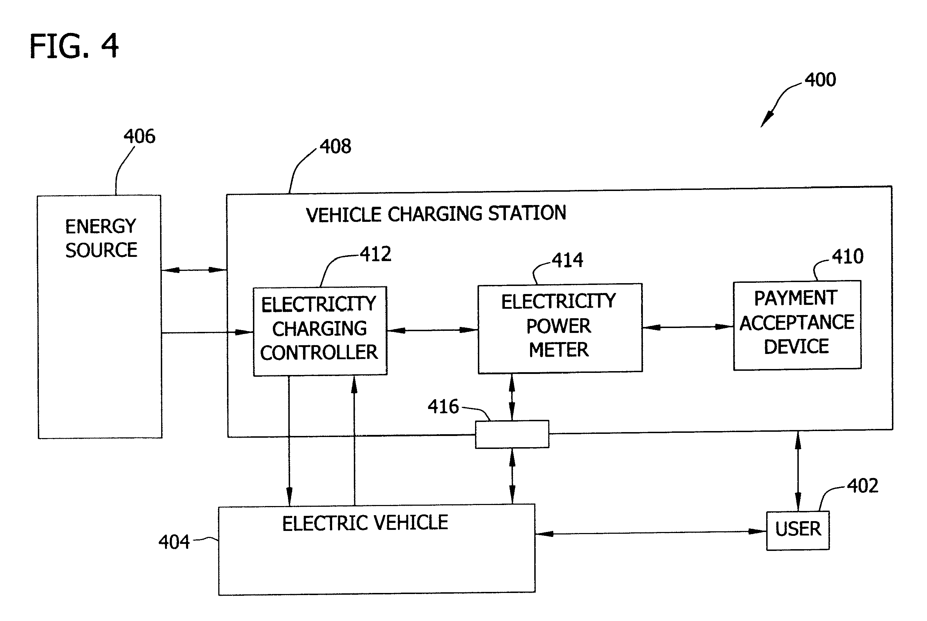

Figure 4 illustrates a user 402 interacting with an exemplary vehicle charging system 400 and an electric vehicle 404 to charge electric vehicle 404. In the exemplary embodiment, system 400 includes an energy source 406 coupled to a vehicle charging station 408. In such an embodiment, vehicle charging station 408 includes a payment acceptance device 410, an electrical charging controller 412 that receives electrical charging power from energy source 406 to transmit to electricity power meter 414, and a conduit 416 that couples electric vehicle 404 to electricity power meter 414. The components of system 400 are similar to the components of system 200 shown in Figure 2; as such, the components of system 400 function similarly to the components of system 200 as described above. In the exemplary embodiment though, vehicle charging station 408 includes electricity charging controller 412, electricity power meter 414, conduit 416, and payment acceptance device 410 thus enabling vehicle charging station 408 to operate in a standalone form factor, such as a kiosk or as a replacement for a gas pump, for use in charging electric vehicle 404. In another embodiment, vehicle charging station 408 is capable of delivering a predetermined quantity of electrical charging power to provide an emergency charge to electric vehicle 404 adequate for electric vehicle 404 to be driven a short distance.

In the exemplary embodiment, vehicle charging station 408 displays at least one of the quantity of electrical charging power delivered, the monetary value of the quantity of electrical charging power delivered, the quantity of electrical charging power remaining to be delivered, and/or the remaining balance of the monetary value of a payment received by payment acceptance device 410. Such a display can be performed via any suitable display known to those skilled in the art and guided by the teachings herein provided, such as via an LCD display screen coupled to vehicle charging station 408 or to electric vehicle 404.

In one embodiment, vehicle charging station 408 includes charge management circuit that senses charging requirement parameters from electric vehicle 404 enabling vehicle charging station 408 to provide an appropriate charging regime for electric vehicle 404. In another embodiment, vehicle charging station 408 includes a user input device (not shown) enabling user 402 to input charging requirement parameters for electric vehicle 404, by, for example, providing a selection to the customer based on at least one of the vehicle type, battery capacity, voltage ranges, or other suitable parameters known to those skilled in the art.

Described in detail herein are exemplary embodiments of methods, systems, and controllers that facilitate metering the electricity transferred to a vehicle when charging the vehicles, such as electric vehicles. Moreover, the embodiments described herein require a payment from a user either before or after the energy is delivered to the electric vehicle. Requiring payments at the time of the electrical charging transaction enables customers to dynamically respond to the electricity needs of their electric vehicles. In addition, the system can enable the use of a multitude of payment methods such as prepaid stored value cards, debit/credit cards, and cash. Further, the embodiments described herein facilitate enabling a customer to obtain a small amount of energy for an electric vehicle for emergency use when a customer lacks the funds for the energy yet still needs to drive home. The amount of energy available can be limited based on identifying the electric vehicle as to minimize abuse.

Exemplary embodiments of a system and method for pay as you go charging for use with electric vehicles are described above in detail. The invention is not limited to the specific embodiments described herein, for example, the system may also be used with a hybrid-vehicle that uses a combination of electricity and engine provided power for movement, and thus is not limited to practice with only the methods and systems as described herein. Rather, the exemplary embodiment can be implemented and utilized in connection with many other electricity storage applications.

As will be appreciated based on the foregoing specification, the above described embodiments of the disclosure may be implemented using computer programming or engineering techniques including computer software, firmware, hardware or any combination or subset thereof, wherein the technical effect is to charge an energy storage system in an electric vehicle, measure the charging power transferred to the electric vehicle, and provide a method of billing for the charging power. Any such resulting program, having computer-readable code means, may be embodied or provided within one or more computer-readable media, thereby making a computer program product, i.e., an article of manufacture, according to the discussed embodiments of the disclosure. The computer readable media may be, for example, but is not limited to, a fixed (hard) drive, diskette, optical disk, magnetic tape, semiconductor memory such as ROM, and/or any transmitting/receiving medium such as the Internet, or other communications network or link. The article of manufacture containing the computer code may be made and/or used by executing the code directly from one medium, by copying the code from one medium to another medium, or by transmitting the code over a network.

The methods, systems, and controllers described herein are not limited to the specific embodiments described herein. For example, components of each system and/or steps of each method may be used and/or practiced independently and separately from other components and/or steps described herein. In addition, each component and/or step may also be used and/or practiced with other assembly packages and methods.

## Claims

1. A vehicle charging station (104,206,208,408) for use in transmitting electrical charging power to a vehicle (102,404) for use in charging the vehicle, said vehicle charging station comprising:
a controller (210) configured to receive a request (112,212) for authorization from the vehicle, and transmit a response (114,214) to the vehicle, wherein the response indicates either an approval or a denial of the request; and
an electricity power meter (110,216,414) configured to:
receive a quantity of electrical charging power and measurement information from said controller;
measure the quantity of electrical charging power delivered to the vehicle; and
transmit the measurement of the quantity of received electrical charging power to the controller.

2. A vehicle charging station (104,206,208,408) in accordance with claim 1, wherein said station further comprises a payment acceptance device (218,410) configured to receive at least one payment from a user (402).

3. A vehicle charging station (104,206,208,408) in accordance with claim 2, wherein said station is further configured to deny access to electrical charging power until at least one payment is received from a user (402).

4. A vehicle charging station (104,206,208,408) in accordance with claim 3, wherein said payment acceptance device (218,410) is further configured to transmit a monetary value of the payment to said electricity power meter (110,216,414), said electricity power meter is further configured to deliver a quantity of electrical charging power to the vehicle (102,404) based on the monetary value of the payment received.

5. A vehicle charging station (104,206,208,408) in accordance with any of claims 2 to 4, wherein said payment acceptance device (218,410) is further configured to:
receive at least one payment based on the quantity of electrical charging power to be delivered;
deduct the monetary value of the quantity of electrical charging power from the monetary value of the payment; and
provide for a refund of any remaining balance of the monetary value of the payment based on the deduction.

6. A vehicle charging station (104,206,208,408) in accordance with claim 5, wherein said payment acceptance device (218,410) is further configured to display at least one of a quantity of electrical charging power delivered, a monetary value of the quantity of electrical charging power delivered, a quantity of electrical charging power remaining to be delivered, and a remaining balance of the monetary value of the payment.

7. A vehicle charging station (104,206,208,408) in accordance with any of the preceding claims, wherein said request for authorization further includes a request for a pre-determined quantity of electrical charging power.

8. A vehicle charging system (200,400) for use with charging an electric vehicle, said system comprising:
an electricity charging controller (210) configured to:
receive a request (112,212) for authorization for an electric charging transaction from the electric vehicle (102,404); and
send a response (114,214) to the electric vehicle (102,404) indicating an approval or denial of the request;
a conduit (102,404) configured to couple the electric vehicle to an energy source (106,206,406) to receive electrical charging power from the energy source; and
an electricity power meter (110,216,414) configured to:
receive a quantity of electrical charging power and measurement information from the controller (210); and
deliver the requested quantity of electrical charging power received by the controller, to the electric vehicle based on the information received by the controller.

9. A vehicle charging system (200,400) in accordance with claim 8, further comprising a payment acceptance device (218,410) configured to receive at least one payment from a user.

10. A vehicle charging system (200,400) in accordance with claim 9, wherein said charging controller (210) is further configured to deny access to electrical charging power until at least one payment is received

11. A method for charging an electric vehicle, said method comprising:
receiving a request for authorization for an electric charging transaction from the electric vehicle;
transmitting a response to the electric vehicle, wherein the response is indicative of one of an approval and a denial of the request;
receiving, from an electricity power meter, a quantity of electrical charging power, wherein the electricity power meter is configured to:
receive measurement information from an electricity charging controller;
measure a quantity of electrical charging power delivered to the electric vehicle; and
transmit the requested quantity of electric charging power to the vehicle.

12. A method in accordance with claim 11, further comprising receiving a predetermined quantity of electrical charging power.

13. A method in accordance with claim 11 or 12, further comprising receiving at least one payment from a user, wherein the payment is received by a payment acceptance device.

14. A method in accordance with claim 13, further comprising denying access to electrical charging power until at least one payment is received.

15. A method in accordance with claim 14, further comprising transmitting a monetary value of the payment to the electricity power meter, wherein the electricity power meter is further configured to deliver only a quantity of electrical charging power associated with the monetary value of the payment.
